# EUROPEAN PATENT SPECIFICATION

(11) **EP 4 304 368 B1**
(45) Date of publication and mention of the grant of the patent: **30.10.2024**
(21) Application number: 22711517.7
(22) Date of filing: 07.03.2022
(51) Int. Cl.: A23F 5/04, A23F 5/46

(54) **AROMA-INFUSED COFFEE BEANS**
AROMATISIERTE KAFFEEBOHNEN
GRAINS DE CAFÉ INFUSÉS PAR DES ARÔMES

(30) Priority: 10.03.2021 US 202163158972 P; 19.03.2021 EP 21163616
(43) Date of publication of application: 17.01.2024
(73) Proprietor: Société des Produits Nestlé S.A., 1800 Vevey (CH)
(72) Inventor: MORA, Federico, 1110 Morges (CH); DAVIDEK, Tomas, 1744 Chénens (CH); POLSTER, Johannes, 1350 Orbe (CH)
(74) Representative: Ducreux, Marie
(86) International application number: PCT/EP2022/055676
(87) International publication number: WO 2022/189325

(56) References cited:
- WO-A1-2019/068497
- WO-A2-2017/089810
- JP-A- 2019 180 291
- US-A1- 2019 387 764

## Description

### Field of the Invention

The present invention relates to a method for preparing aroma-infused coffee beans. Further aspects of the invention are roasted aromatic alcoholic beverage-infused coffee beans having low levels of ethyl carbamate, as well as the use of reduced-alcohol alcoholic beverage to infuse coffee beans.

### Background of the Invention

Coffee is a brewed beverage typically prepared by steeping ground coffee beans in hot water. Although coffee is widely appreciated as having a desirable flavour and aroma, consumers frequently enjoy coffee beverages with additional complementary flavours and aromas.

The flavours and aromas associated with alcoholic drinks, particularly aged alcoholic spirits, tend to be considered as a more premium product by consumers, and are thus desirable for infusion into coffee beans. Specifically, the dark, aromatic, and woody notes of brown spirits such as brandies, whiskys, dark rums, and the like have been found to pair well with the bittersweet notes of coffee.

Consumers would like to be provided with aroma-infused roasted coffee beans which have been prepared using familiar authentic ingredients rather than by the addition of a complex mixture of flavour compounds, some of which may be artificial.

Hence, there is a clear need in the industry to find better solutions for preparing aroma-infused roasted coffee beans.

Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to".

JP2019180291 A discloses a production method of aromatic coffee beans increasing variations of aromas.

US2019/387764 A1 discloses a method of preparing flavor-infused roasted coffee beans.

### Summary of the invention

An object of the present invention is to improve the state of the art and to provide an improved solution to overcome at least some of the inconveniences described above. The object of the present invention is achieved by the subject matter of the independent claims. The dependent claims further develop the idea of the present invention.

Accordingly, the present invention provides in a first aspect a method for preparing aroma-infused roasted coffee beans, the method comprising;
a. reducing the ethanol content of an aromatic alcoholic beverage to below 1 wt.% to form a reduced-alcohol aromatic alcoholic beverage,
b. contacting the reduced-alcohol aromatic alcoholic beverage with coffee beans,
c. infusing reduced-alcohol aromatic alcoholic beverage into the coffee beans to yield infused coffee beans,
d. roasting the infused coffee beans to yield aroma-infused roasted coffee beans.

In a second aspect, the invention relates to roasted aromatic alcoholic beverage-infused coffee beans having a level of ethyl carbamate of less than 0.3 mg/kg. A third aspect of the invention relates to the use of reduced-alcohol aromatic alcoholic beverage to infuse coffee beans.

It has been surprisingly found by the inventors that infusing coffee beans with a reduced-alcohol aromatic alcoholic beverage such as reduced-alcohol whisky allows the preparation of roasted coffee beans having the desirable aroma of whisky but without unwanted contaminants such as ethyl carbamate.

### Detailed Description of the invention

Consequently the present invention relates in part to a method for preparing aroma-infused roasted coffee beans, the method comprising;
a. reducing the ethanol content of an aromatic alcoholic beverage (for example an aromatic distilled spirit) to below 1 wt.% (for example below 0.75 wt.%, 0.6 wt.%. 0.5 wt.%, 0.4 wt.%, 0.3 wt.%) to form a reduced-alcohol aromatic alcoholic beverage (for example a reduced-alcohol aromatic distilled spirit),
b. contacting the reduced-alcohol aromatic alcoholic beverage (for example the reduced-alcohol aromatic distilled spirit) with coffee beans,
c. infusing reduced-alcohol aromatic alcoholic beverage (for example reduced-alcohol aromatic distilled spirit) into the coffee beans to yield infused coffee beans,
d. roasting the infused coffee beans to yield aroma-infused roasted coffee beans.

The aromatic alcoholic beverage may be selected from the group consisting of wine, beer, whisky, brandy, rum, tequila and gin. The aromatic alcoholic beverage may be an aromatic distilled spirit. The aromatic distilled spirit may be selected from the group consisting of whisky, brandy, rum, tequila and gin. The aromatic distilled spirit may be whisky.

In the context of the present invention the term whisky refers to a distilled alcoholic beverage made from grain mash. A variety of cereal grains such as corn, rye, barley and wheat may be used in the fermentation process. The distilled beverage is then aged in wooden casks, typically made of charred white oak. In Ireland and the USA, whisky is generally spelled "whiskey", but the two spellings are considered equivalent in this specification.

In the context of the present invention the term brandy refers to spirits distilled from fruit. Brandy may be a grape-based spirit distilled from wine, but it may also be an apple brandy such as Calvados distilled from fermented apple juice or a cherry brandy distilled from fermented cherry juice.

Rum is distilled from fermented sugar, for example fermented sugar cane juice or fermented molasses. Tequila is distilled from the fermented juice of the agave plant. Gin is distilled from fermented grain mash such as barley or rye and is flavoured with juniper berries and in some cases other botanical ingredients such as angelica, liquorice, dried citrus peel, caraway seeds and coriander seeds.

The term reduced-alcohol aromatic alcoholic beverage refers to an aromatic alcoholic beverage such as a genuine wine or whisky which has had at least a proportion of its ethanol removed. The term reduced-alcohol aromatic distilled spirit refers to an aromatic distilled spirit such as a genuine whisky which has had at least a proportion of its ethanol removed. This is distinct from ersatz low-or no-alcohol aromatic spirits, being mixtures of components combined to approximate to the taste of the genuine spirit.

The reduced-alcohol aromatic alcoholic beverage (for example reduced-alcohol aromatic distilled spirit) may be contacted (for example blended) with coffee beans by a number of means. The contacting may be in the form of mixing. For example, the reduced-alcohol aromatic alcoholic beverage may be contacted with coffee beans by gently tumbling the beans in a rotating drum and adding the reduced-alcohol aromatic alcoholic beverage. For further example, the reduced-alcohol aromatic alcoholic beverage may be contacted with coffee beans by mixing the beans with the reduced-alcohol aromatic alcoholic beverage in a conical screw mixer. For further example, the reduced-alcohol aromatic alcoholic beverage may be contacted with coffee beans by spraying the beans with the reduced-alcohol aromatic alcoholic beverage, such as spraying the beans while they are transported on a belt conveyor. For further example, the reduced-alcohol aromatic alcoholic beverage may be contacted with coffee beans by placing the beans in mesh cages and dunking them into tanks of the reduced-alcohol aromatic alcoholic beverage. For still further example, the reduced-alcohol aromatic alcoholic beverage may be contacted with coffee beans by heating the reduced-alcohol aromatic alcoholic beverage to form a vapour and passing the vapour over the beans, the beans may for example be at a lower temperature than the vapour such that the reduced-alcohol aromatic alcoholic beverage condenses onto the beans.

The coffee beans may be green beans or they may be partially roasted beans, for example beans obtained by heating green coffee beans and stopping said heating process before the end of the "first crack" stage. The "first crack" is well known to those skilled in coffee roasting and refers to an audible crack caused by the coffee bean expanding during roasting. Partially roasted beans may for example be centrally produced and then distributed to consumers or to small retail outlets where the final roasting is applied to the partially roasted beans.

Green coffee beans, sometimes called green coffee grains, are coffee beans that have not be subjected to roasting, for example they may have not been exposed to temperatures above 110°C.

The production of coffee starts with the collection of mature, ripe red cherries. The outer layer, or pericarp, can then be removed using either the dry or wet process. The dry process involves 1) classification and washing of the cherries, 2) drying the cherries after grading (either air drying or mechanical drying), and 3) dehusking the dried cherries to remove the dried pericarp. The wet process consists of 1) classification of the cherries, 2) pulping of the cherries, this step is done soon after harvest and generally involves mechanical removal of the "pulp", or pericarp, of the mature cherries, 3) "fermentation", the mucilage that remains attached to the bean of the cherries after pulping is removed by allowing the bean plus attached mucilage to be incubated with water in tanks using a batch process. The "fermentation" process is allowed to continue up to 80 hours, although often 24 hours is generally enough to allow an acceptable fermentation and to cause the pH to drop from around 6.8-6.9 to 4.2-4.6, due to various enzymatic activities and the metabolic action of microorganisms which grow during the fermentation, 4) drying, this step involves either air or mechanical hot air drying of the fermented coffee bean and 5) "hulling", this step involves the mechanical removal of the "parch" of the dried coffee bean (dried parchment coffee) and often the silverskin is also removed at this stage. After wet or dry processing, the resulting green coffee beans are often sorted, with most sorting procedures being based on bean size and/or shape.

Coffee beans are seeds of the coffee plant (*Coffea*)*.* The green coffee may be arabica or robusta or combinations of these. Arabica coffee beans are coffee beans from arabica coffee plants (*Coffea arabica*) and robusta coffee beans are beans from robusta coffee plants (*Coffea canephora*).

During infusion, the reduced-alcohol aromatic alcoholic beverage (for example a reduced-alcohol aromatic distilled spirit) soaks into the coffee beans. While the beans are in contact with the reduced-alcohol aromatic alcoholic beverage, the desirable flavour and aroma compounds of the beverage (for example the distilled spirit) infuse into the coffee beans.

In an embodiment the reduced-alcohol aromatic alcoholic beverage (for example a reduced-alcohol aromatic distilled spirit) is blended with the coffee beans at a weight ratio of from 99:1 to 4:1 coffee beans to reduced-alcohol aromatic alcoholic beverage, for example at a weight ratio of from 50:1 to 5:1, for example at a weight ratio of from 20:1 to 5:1, for example at a weight ratio of from 15:1 to 7:1, for further example at a weight ratio of from 10:1 to 8:1. The reduced-alcohol aromatic alcoholic beverage may be concentrated before being blended with the coffee beans.

The reduced-alcohol aromatic alcoholic beverage (e.g. reduced-alcohol aromatic distilled spirit) may be infused into the coffee beans for a period of time sufficient to reach a desired degree of infusion. In an embodiment, the reduced-alcohol aromatic alcoholic beverage is infused into the coffee beans for a period of from 10 minutes to 80 hours. For example from 30 minutes to 48 hours, for example from 1 hour to 36 hours, for example from 4 hours to 24 hours, for further example from 8 hours to 16 hours.

After infusing the reduced-alcohol aromatic alcoholic beverage into the coffee beans, the coffee beans may be separated from the reduced-alcohol aromatic alcoholic beverage. In an embodiment the beans may be filtered or screened away from the reduced-alcohol aromatic alcoholic beverage. In an embodiment, the reduced-alcohol aromatic alcoholic beverage may be drained away from the beans and reserved for additional infusions.

In an embodiment the infused coffee beans are dried before being roasted. For example they may be dried in hot air hot air, for example at a temperature of from 50 °C to 90 °C. For further example, the coffee beans may be contacted with the reduced-alcohol aromatic alcoholic beverage by mixing and infusing in a conical screw mixer fitted with a heater. Once the beans have been infused, the heating may be applied to dry the beans.

The infused coffee beans are subjected to roasting in the method of the invention. Advantageously, the flavour and aromas infused into the beans will further develop during the roasting process. The roasting process rounds out the flavour profile of the infused beans, lending additional complexities and undertones to the finished cup. The infused beans may be roasted at a temperature between about 150 °C to about 300 °C. The temperature of the coffee beans typically reaches between about 170°C and about 260°C during roasting. The roasting time typically varies between about 1 minute and about 30 minutes.

Roast bean colour may be expressed in CTN units. CTN roast colour may vary between 0 and 200 and is determined by measuring the intensity of Infrared (IR) light (904 nm) that is back scattered by the sample when measured with a spectrophotometer, such as Neuhaus Neotec's ColorTest II^{®}. The spectrophotometer illuminates the surface of the ground sample with monochromatic IR light at a wavelength of 904 nm from a semi-conductor source. A photo-receiver, which has been calibrated, measures the amount of light reflected by the sample. The mean value series of measurement is calculated and displayed by electronic circuit. The colour of the coffee beans is directly related to its roast level. For example, green coffee beans have typically a CTN of above 200, extremely lightly roasted coffee beans have typically a CTN of around 150, lightly roasted coffee beans have typically a CTN around 100 and medium-dark coffee beans have typically a CTN of around 70. Very dark roasted coffee beans have typically a CTN around 45. In an embodiment, the infused coffee beans are roasted to obtain lightly roasted or medium-dark roasted beans.

After roasting, the beans may be cooled and allowed to rest to allow any final flavour development to occur.

In an embodiment of the method for preparing aroma-infused roasted coffee beans, the method comprises;
a. reducing the ethanol content of an aromatic alcoholic beverage (for example an aromatic distilled spirit) to below 1 wt.% (for example below 0.75 wt.%, 0.6 wt.%. 0.5 wt.%, 0.4 wt.%, 0.3 wt.%) to form a reduced-alcohol aromatic alcoholic beverage (for example a reduced-alcohol aromatic distilled spirit),
b. contacting the reduced-alcohol aromatic alcoholic beverage (for example the reduced-alcohol aromatic distilled spirit) with green coffee beans,
c. infusing reduced-alcohol aromatic alcoholic beverage (for example reduced-alcohol aromatic distilled spirit) into the coffee beans to yield infused coffee beans,
d. roasting the infused coffee beans to yield aroma-infused roasted coffee beans.

In an embodiment, the aroma-infused roasted coffee beans are ground. Any type of grinding equipment may be employed to grind the aroma-infused roasted coffee beans and reduce them to particles. Non-limiting examples of grinding equipment may include a cage mill, a hammer mill, a single-stage roller grinder, a multistage roller grinder, and the like. In some embodiments, it may be desirable to ensure that the equipment is maintained at low temperatures (e.g., about 0 °C. to 15 °C.) via cooling media to help preserve the desired flavour profile of the aroma-infused roasted coffee beans. However, in an embodiment, grinding may be performed at room temperature (i.e. about 20 °C) to facilitate preparation in a coffee shop. In an embodiment, the aroma-infused roasted coffee beans are ground to a particle size distribution d50 of less than 1000 µm, for example less than 600 µm, for further example less than 400 µm. The particle size d50 is used in the conventional sense for particle size distributions by volume. The d50 is the size in that splits the volume distribution with half above and half below this diameter. The particle size distribution may be measured by laser light scattering.

The aroma-infused roasted coffee beans may be extracted with water. The aroma-infused roasted coffee beans are preferably ground before being extracted with water. By extraction with water is meant that the coffee beans are extracted with purified water, tap water, and/or another aqueous liquid such as e.g. an aqueous coffee extract. Extraction may be performed by any suitable method known in the art. Methods for extracting coffee beans are well known in the art of production of soluble coffee, e.g. from EP0826308, and normally involves several extraction steps at increasing temperature. In a preferred embodiment, extraction of roast coffee beans is performed at a temperature of between 140°C and 300°C, whereby is meant that the extraction temperature reaches a temperature of at least 140°C during the extraction although parts of the extraction may be performed at lower temperatures, and that the temperature during extraction at no point exceeds 300°C. When the desired degree of extraction has been reached, the extracted roast coffee beans are separated from the extract. The separation may be achieved by any suitable means, e.g. filtration, centrifugation, and/or decanting. In conventional coffee extraction for the production of soluble coffee, the separation is usually achieved by performing the extraction in extraction cells wherein the coffee grounds are retained by filter plates or retainer plates through which the coffee extract can flow. During extraction, volatile aroma compounds may be recovered from the extract. The recovered volatile compounds may be added back to the extract after extraction. Methods for aroma recovery and add-back are well known in the art of soluble coffee production.

The aqueous coffee extract may be further processed into pure soluble coffee powder, for example by spray-drying or freeze drying the extract.

The aqueous coffee extract may be further processed into a ready to drink coffee, for example by adjusting the concentration of the extract and packing it in a suitable container such as a bottle or can; or by processing the aqueous extract into a soluble coffee powder which is then re-dissolved and packed in a suitable container such as a bottle or can.

The aroma-infused roasted coffee beans may be partially roasted beans, for example the infused coffee beans (for example infused green coffee beans) may be roasted only to the end of the "first crack" stage.

In an embodiment of the method for preparing aroma-infused roasted coffee beans, the method comprises;
a. reducing the ethanol content of an aromatic alcoholic beverage (for example an aromatic distilled spirit) to below 1 wt.% (for example below 0.75 wt.%, 0.6 wt.%. 0.5 wt.%, 0.4 wt.%, 0.3 wt.%) to form a reduced-alcohol aromatic alcoholic beverage (for example a reduced-alcohol aromatic distilled spirit),
b. contacting the reduced-alcohol aromatic alcoholic beverage (for example the reduced-alcohol aromatic distilled spirit) with green coffee beans,
c. infusing reduced-alcohol aromatic alcoholic beverage (for example reduced-alcohol aromatic distilled spirit) into the coffee beans to yield infused coffee beans,
d. roasting the infused coffee beans to yield aroma-infused partially roasted coffee beans.

Beverage preparation devices (for example beverage preparation machines) which accommodate extractable portioned ingredients provide a convenient method of preparing beverages. Such portioned ingredients are generally packed in a container, configured for example as a pod, pad, sachet, pouch, capsule or the like. In an embodiment, the ground aroma-infused roasted coffee beans are filled into a container, the container being for the preparation of a beverage when inserted into a beverage preparation device. The container may for example be a beverage capsule, among other configurations.

In an embodiment, the ethanol content of the aromatic alcoholic beverage (for example the aromatic distilled spirit) is reduced by evaporation. For example, the aromatic alcoholic beverage may be subjected to a pressure below atmospheric pressure, for example less than 20 mbar at a temperature between 20 and 60 °C. Following evaporation of the ethanol, the aromatic alcoholic beverage may be diluted with water to the original volume. Evaporation may for example be performed in a falling-film evaporator or a centrifugal evaporator. In an embodiment, the aromatic alcoholic beverage is diluted with water before evaporation as this is found to reduce the losses of desirable aromas.

In an embodiment, the aromatic alcoholic beverage may be frozen, for example at a temperature of -10 °C, such that the water component is in solid form but the ethanol remains liquid, before subjecting the frozen aromatic alcoholic beverage to vacuum evaporation to reduce the ethanol content.

In an embodiment the ethanol content of the aromatic alcoholic beverage is reduced using a membrane. For example the aromatic alcoholic beverage may be fed to one or more membrane separators where water and ethanol passes through the membranes as permeate leaving a concentrated retentate. The retentate may be fed to the membrane separator a number of times until the desired volume remains. For example, the aromatic alcoholic beverage may be repeatedly cycled through the membrane separator until its volume has been reduced by a factor of 5. In an embodiment the ethanol content of the aromatic alcoholic beverage is reduced using a combination of membrane separation and diafiltration techniques. For example, after concentrating the aromatic alcoholic beverage using a membrane separator, additional water may be added to the retentate before it is passed again through the membrane separator to further reduce the ethanol content. In an embodiment the ethanol content of the aromatic alcoholic beverage is reduced using reverse osmosis or nanofiltration.

In an embodiment, before and/or during the step of reducing the ethanol content of the aromatic alcoholic beverage extraction, volatile aroma compounds may be recovered from the aromatic alcoholic beverage (e.g. by steam stripping or the use of vacuum) and then added back to the aromatic alcoholic beverage after its ethanol content has been reduced.

In an embodiment, aromatic alcoholic beverage which has not been subjected to a step of reducing its ethanol content may form part of the reduced-alcohol aromatic beverage. This has the advantage of enhancing high volatile components that might be lost during the step of reducing ethanol content. For example, the reduced-alcohol aromatic alcoholic beverage may comprise between 0.01 and 10 wt.% of aromatic alcoholic beverage which has not been subjected to a step of reducing its ethanol content, for example between 0.02 and 5 wt.% of aromatic alcoholic beverage which has not been subjected to a step of reducing its ethanol content, for example between 0.03 and 2 wt.% of aromatic alcoholic beverage which has not been subjected to a step of reducing its ethanol content, for further example between 0.05 and 1 wt.% of aromatic alcoholic beverage which has not been subjected to a step of reducing its ethanol content.

Reducing the ethanol content of an aromatic alcoholic beverage before infusing it into coffee beans and roasting the beans has surprisingly been found to result in aroma-infused roasted coffee beans with low levels of ethyl carbamate. Traces of ethyl carbamate are found in most yeast-fermented alcoholic beverages. Ethyl carbamate has been designated as "possibly carcinogenic to humans" and mitigation measures to reduce consumption are recommended. In an embodiment, the level of ethyl carbamate of the aroma-infused roasted coffee beans is less than 0.3 mg/kg. For example, the level of ethyl carbamate of the aroma-infused roasted coffee beans is less than 0.2 mg/kg, for example less than 0.1 mg/kg, for further example less than 0.05 mg/kg ethyl carbamate.

An aspect of the invention provides roasted aromatic alcoholic beverage-infused coffee beans having a level of ethyl carbamate of less than 0.3 mg/kg; for example, roasted aromatic distilled spirit-infused coffee beans having a level of ethyl carbamate of less than 0.3 mg/kg; for further example, roasted whisky-infused coffee beans having a level of ethyl carbamate of less than 0.3 mg/kg. As will be clear from the preceding paragraphs, the beverage with which the coffee beans have been infused to provide roasted beverage-infused coffee beans is an aromatic alcoholic beverage such as whisky, but the beverage may have been reduced in alcohol content prior to infusing the coffee beans. In an embodiment, the roasted aromatic alcoholic beverage-infused coffee beans are ground. An aspect of the invention provides a container containing the roasted aromatic alcoholic beverage-infused coffee beans of the invention wherein the container is for the preparation of a beverage when inserted into a beverage preparation device.

The roasted aromatic alcoholic beverage-infused coffee beans having a level of ethyl carbamate of less than 0.3 mg/kg may have been partially-roasted. An embodiment of the invention provides partially roasted aromatic alcoholic beverage-infused coffee beans having a level of ethyl carbamate of less than 0.3 mg/kg wherein the partially roasted aromatic alcoholic beverage-infused coffee beans are for use in further roasting. An embodiment of the invention provides partially roasted aromatic alcoholic beverage-infused coffee beans having a level of ethanol of less than 1 wt.% wherein the partially roasted aromatic alcoholic beverage-infused coffee beans are for use in further roasting. The partially roasted aromatic alcoholic beverage-infused coffee beans may have a level of ethyl carbamate of less than 0.3 mg/kg and a level of ethanol of less than 1 wt.% wherein the partially roasted aromatic alcoholic beverage-infused coffee beans are for use in further roasting.

An aspect of the invention provides roasted aromatic alcoholic beverage-infused coffee beans obtainable (for example obtained) by the method of the invention. For example, roasted aromatic distilled spirit-infused coffee beans obtainable (for example obtained) by the method of the invention.

A further aspect of the invention is the use of reduced-alcohol aromatic alcoholic beverage to infuse coffee beans, for example the use of reduced-alcohol aromatic spirit to infuse coffee beans. The reduced-alcohol aromatic alcoholic beverage (for example a reduced-alcohol aromatic spirit) may have an ethanol content below 1 wt.%, for example below 0.75 wt.%, for example below 0.6 wt.%. for example below 0.5 wt.%, for example below 0.4 wt.%, for further example below 0.3 wt.%. The coffee beans may be green beans; partially roasted beans intended to be subsequently further roasted; or they may be fully roasted beans, for example roasted beans ready to be ground and extracted with water for the preparation of a coffee beverage.

In an embodiment, the use of reduced-alcohol aromatic alcoholic beverage to infuse roasted coffee beans may be by quenching the beans with reduced-alcohol aromatic alcoholic beverage. Quenching is the process by which hot roasted coffee is cooled rapidly once the desired level of roast has been achieved. Advantageously, quenching roasted coffee beans with reduced-alcohol aromatic alcoholic beverage results in coffee with a lower level of ethyl carbamate than would result if the beans were quenched with an aromatic beverage which has not been reduced in alcohol.

In an embodiment, the use of reduced-alcohol aromatic alcoholic beverage to infuse roasted coffee beans may be by adding reduced-alcohol aromatic alcoholic beverage to the beans as they are packed. For example adding reduced-alcohol aromatic alcoholic beverage to roast and ground beans filled into a container, wherein the container is for the preparation of a beverage when inserted into a beverage preparation device. In an embodiment of the use of reduced-alcohol aromatic alcoholic beverage to infuse roasted coffee beans, an aromatic alcoholic beverage which has not been subjected to a step of reducing its ethanol content may be added to roast and ground beans, for example filled into a container. For example, aromatic alcoholic beverage which has not been reduced in ethanol content may be sprayed into the container before sealing. This has the advantage of enhancing high volatile components. For example, the overall quantity of aromatic alcoholic beverage filled into the container may comprise between 0.01 and 10 wt.% of aromatic alcoholic beverage which has not been reduced in ethanol content, for example between 0.02 and 5 wt.% of aromatic alcoholic beverage which has not been reduced in ethanol content, for example between 0.03 and 2 wt.% of aromatic alcoholic beverage which has not been reduced in ethanol content, for further example between 0.05 and 1 wt.% of aromatic alcoholic beverage which has not been reduced in ethanol content.

A further aspect of the invention is the use of a reduced-alcohol aromatic alcoholic beverage (for example a reduced-alcohol aromatic spirit) to flavour a ready-to-drink coffee beverage.

Those skilled in the art will understand that they can freely combine all features of the present invention disclosed herein. In particular, features described for the method of the present invention may be combined with the product of the present invention and vice versa. Further, features described for different embodiments of the present invention may be combined. Where known equivalents exist to specific features, such equivalents are incorporated as if specifically referred to in this specification.

Further advantages and features of the present invention are apparent from the non-limiting examples.

### Examples

### Example 1: Dealcoholization of whisky using centrifugal vacuum evaporation

100 grams of *Jack Daniel's* Whiskey with ~40% initial alcohol content was weighed into two glass centrifuge flasks. Two balancing flasks were prepared and all flasks were placed into a *GeneVac Rocket* benchtop centrifuge. The instrument was run with the low boiling point method, set to 40 °C and a run time of 60 minutes. The vacuum is automatically set by the instrument, being <20 millibar.

At the end of evaporation, the whisky concentrate from both flasks was 10 % of the original volume. This was removed and diluted back to the original mass (200g) with distilled water. The ethanol content reduced from ^{~}31 wt.% to 4.7 wt.%.

### Example 2: Dealcoholization of whisky using membrane separation

The alcohol in *Jack Daniel's* Whiskey was reduced using a nanofiltration apparatus (MMS Membrane Systems - Triple System). 500 grams of *Jack Daniel's* Whiskey with ^{~}31 wt.% initial alcohol content was subjected to a first concentration step, the feed being passed through three nanofiltration membranes in series (Toray type-TNF), removing ^{~}400 g of permeate and retaining ^{~}100 g of retentate. The retentate was then passed through four successive diafiltration steps. In each step, ^{~}100 g of water was added to the retentate before being passed through the triple nanofiltration membranes. The membranes were operated at 7°C and 35 bar pressure. At each diafiltration step, ^{~}100 g of permeate was removed and ^{~}100 g of retentate passed to the next diafiltration step. The final retentate of ^{~}100 g was diluted with water to the original mass of 500 g. The ethanol content was reduced to 0.6 wt.%. The beans have a level of ethyl carbamate of around 0.04 mg/kg after roasting.

### Example 3: Infusion of coffee beans with reduced alcohol whisky followed by roasting.

The low alcohol whisky from Example 1 was used to infuse green coffee beans at 20 °C for 240 minutes. The green coffee beans were placed in a zip bag and reduced alcohol whisky was added to the bag such that weight of infusing liquid was 10% of the weight of the final infused mixture. The contents of the bag were mixed vigorously for 5 minutes and held at 20°C for 4 hours to infuse the green coffee beans. The infused beans were then roasted in a laboratory coffee roaster (Neuhaus Neotec) to a CTN of 73. As a reference, the process was repeated but with *Jack Daniel's* Whiskey which had not been reduced in alcohol. The level of ethyl carbamate was 4.1 mg/kg in the reference, but only 0.29 mg/kg in the roasted beans that had been infused with the low alcohol whisky. The roasted beans were ground and coffee beverages prepared with 40 g of roast and ground coffee in a filter coffee maker with 1 L of water. The level of ethyl carbamate in the brewed coffee was 164 ppb for the reference but only 11.6 ppb for the roasted beans infused with the low alcohol whisky. Both samples of roasted beans provided a coffee with a pleasant whisky aroma and taste.

## Claims

1. A method for preparing aroma-infused roasted coffee beans, the method comprising;
a. reducing the ethanol content of an aromatic alcoholic beverage to below 1 wt.% to form a reduced-alcohol aromatic alcoholic beverage,
b. contacting the reduced-alcohol aromatic alcoholic beverage with coffee beans,
c. infusing reduced-alcohol aromatic alcoholic beverage into the coffee beans to yield infused coffee beans,
d. roasting the infused coffee beans to yield aroma-infused roasted coffee beans.

2. The method according to claim 1 wherein the aromatic alcoholic beverage is selected from the group consisting of wine, beer, whisky, brandy, rum, tequila and gin.

3. The method according to claim 1 or claim 2 wherein the infused coffee beans are dried before being roasted.

4. The method according to any one of claims 1 to 3 wherein the reduced-alcohol aromatic alcoholic beverage is blended with the coffee beans at a weight ratio of from 99:1 to 4:1 coffee beans to reduced-alcohol aromatic alcoholic beverage.

5. The method according to any one of claims 1 to 4 wherein the reduced-alcohol aromatic alcoholic beverage is infused into the coffee beans for a period of from 10 minutes to 80 hours.

6. The method according to any one of claims 1 to 5 wherein the infused coffee beans are roasted to obtain lightly roasted or medium-dark roasted beans.

7. The method according to any one of claims 1 to 6 wherein the aroma-infused roasted coffee beans are ground.

8. The method according to claim 7 wherein the ground aroma-infused roasted coffee beans are filled into a container, the container being for the preparation of a beverage when inserted into a beverage preparation device.

9. The method according to any one of claims 1 to 8 wherein the ethanol content of the aromatic alcoholic beverage is reduced by evaporation.

10. The method according to any one of claims 1 to 8 wherein the ethanol content of the aromatic alcoholic beverage is reduced using a membrane.

11. The method according to any one of claims 1 to 10 wherein the level of ethyl carbamate of the aroma-infused roasted coffee beans is less than 0.3 mg/kg.

12. Roasted aromatic alcoholic beverage-infused coffee beans having a level of ethyl carbamate of less than 0.3 mg/kg.

13. The roasted aromatic alcoholic beverage-infused coffee beans of claim 12 wherein the roasted aromatic alcoholic beverage-infused coffee beans are partially roasted beans for use in further roasting.

14. A container containing the roasted aromatic alcoholic beverage-infused coffee beans of claim 12 wherein the container is for the preparation of a beverage when inserted into a beverage preparation device.

15. Use of reduced-alcohol aromatic alcoholic beverage to infuse coffee beans.

## Patentansprüche

1. Verfahren zum Zubereiten von aromatisierten, gerösteten Kaffeebohnen, das Verfahren umfassend:
a. Reduzieren des Ethanolgehalts eines aromatischen alkoholischen Getränks auf unter 1 Gew.-%, um ein alkoholreduziertes, aromatisches, alkoholisches Getränk zu bilden,
b. Inkontaktbringen des alkoholreduzierten, aromatischen alkoholischen Getränks mit Kaffeebohnen,
c. Aromatisieren der Kaffeebohnen mit dem alkoholreduzierten, aromatischen, alkoholischen Getränk, um aromatisierte Kaffeebohnen zu erhalten,
d. Rösten der aromatisierten Kaffeebohnen, um aromatisierte, geröstete Kaffeebohnen zu erhalten.

2. Verfahren nach Anspruch 1, wobei das aromatische, alkoholische Getränk aus der Gruppe ausgewählt wird, bestehend aus Wein, Bier, Whisky, Brandy, Rum, Tequila und Gin.

3. Verfahren nach Anspruch 1 oder Anspruch 2, wobei die aromatisierten Kaffeebohnen vor dem Rösten getrocknet werden.

4. Verfahren nach einem der Ansprüche 1 bis 3, wobei das alkoholreduzierte, aromatische, alkoholische Getränk mit den Kaffeebohnen in einem Gewichtsverhältnis von 99:1 bis 4:1 Kaffeebohnen zu alkoholreduziertem, aromatischem, alkoholischem Getränk gemischt wird.

5. Verfahren nach einem der Ansprüche 1 bis 4, wobei die Kaffeebohnen über einen Zeitraum von 10 Minuten bis 80 Stunden mit dem alkoholreduzierten, aromatischen, alkoholischen Getränk aromatisiert werden.

6. Verfahren nach einem der Ansprüche 1 bis 5, wobei die aromatisierten Kaffeebohnen geröstet werden, um leicht geröstete oder mitteldunkel geröstete Bohnen zu erlangen.

7. Verfahren nach einem der Ansprüche 1 bis 6, wobei die aromatisierten, gerösteten Kaffeebohnen gemahlen sind.

8. Verfahren nach Anspruch 7, wobei die gemahlenen, aromatisierten, gerösteten Kaffeebohnen in einen Behälter gefüllt werden, wobei der Behälter für die Zubereitung eines Getränks dient, wenn er in eine Getränkezubereitungsvorrichtung eingesetzt ist.

9. Verfahren nach einem der Ansprüche 1 bis 8, wobei der Ethanolgehalt des aromatischen, alkoholischen Getränks durch Verdampfen reduziert wird.

10. Verfahren nach einem der Ansprüche 1 bis 8, wobei der Ethanolgehalt des aromatischen, alkoholischen Getränks durch Verwenden einer Membran reduziert wird.

11. Verfahren nach einem der Ansprüche 1 bis 10, wobei der Ethylcarbamatgehalt der aromatisierten, gerösteten Kaffeebohnen weniger als 0,3 mg/kg beträgt.

12. Geröstete, aromatische, mit alkoholischem Getränk aromatisierte Kaffeebohnen mit einem Ethylcarbamatgehalt von weniger als 0,3 mg/kg.

13. Geröstete, aromatische, mit alkoholischem Getränk aromatisierte Kaffeebohnen nach Anspruch 12, wobei die gerösteten, aromatischen, mit alkoholischem Getränk aromatisierten Kaffeebohnen teilweise geröstete Bohnen zur Verwendung beim weiteren Rösten sind.

14. Behälter, der die gerösteten, aromatischen, mit alkoholischem Getränk aromatisierten Kaffeebohnen nach Anspruch 12 enthält, wobei der Behälter für die Zubereitung eines Getränks dient, wenn er in eine Getränkezubereitungsvorrichtung eingesetzt ist.

15. Verwendung eines alkoholreduzierten, aromatischen, alkoholischen Getränks, um Kaffeebohnen zu aromatisieren.

## Revendications

1. Procédé pour la préparation de grains de café torréfiés infusés par un arôme, le procédé comprenant ;
a. la réduction de la teneur en éthanol d'une boisson alcoolisée aromatique à moins de 1 % en poids pour former une boisson alcoolisée aromatique à teneur réduite en alcool,
b. la mise en contact de la boisson alcoolisée aromatique à teneur réduite en alcool avec des grains de café,
c. l'infusion de la boisson alcoolisée aromatique à teneur réduite en alcool dans les grains de café pour donner des grains de café infusés,
d. la torréfaction des grains de café infusés pour donner des grains de café torréfiés infusés par un arôme.

2. Procédé selon la revendication 1, dans lequel la boisson alcoolisée aromatique est choisie dans le groupe constitué de vin, bière, whisky, brandy, rhum, tequila et gin.

3. Procédé selon la revendication 1 ou la revendication 2, dans lequel les grains de café infusés sont séchés avant d'être torréfiés.

4. Procédé selon l'une quelconque des revendications 1 à 3, dans lequel la boisson alcoolisée aromatique à teneur réduite en alcool est mélangée aux grains de café dans un rapport en poids de 99:1 à 4:1 grains de café par rapport à la boisson alcoolisée aromatique à teneur réduite en alcool.

5. Procédé selon l'une quelconque des revendications 1 à 4, dans lequel la boisson alcoolisée aromatique à teneur réduite en alcool est infusée dans les grains de café pendant une période allant de 10 minutes à 80 heures.

6. Procédé selon l'une quelconque des revendications 1 à 5, dans lequel les grains de café infusés sont torréfiés pour obtenir des grains de torréfaction légère ou des grains de torréfaction moyenne-sombre.

7. Procédé selon l'une quelconque des revendications 1 à 6, dans lequel les grains de café torréfiés infusés par un arôme sont moulus.

8. Procédé selon la revendication 7, dans lequel les grains de café torréfiés infusés par un arôme sont versés dans un récipient, le récipient étant destiné à la préparation d'une boisson lorsqu'il est inséré dans un dispositif de préparation de boisson.

9. Procédé selon l'une quelconque des revendications 1 à 8, dans lequel la teneur en éthanol de la boisson alcoolisée aromatique est réduite par évaporation.

10. Procédé selon l'une quelconque des revendications 1 à 8, dans lequel la teneur en éthanol de la boisson alcoolisée aromatique est réduite à l'aide d'une membrane.

11. Procédé selon l'une quelconque des revendications 1 à 10, dans lequel la teneur en carbamate d'éthyle des grains de café torréfiés infusés par un arôme est inférieure à 0,3 mg/kg.

12. Grains de café torréfiés infusés par une boisson alcoolisée aromatique ayant une teneur en carbamate d'éthyle inférieure à 0,3 mg/kg.

13. Grains de café torréfiés infusés par une boisson alcoolisée aromatique selon la revendication 12, dans lesquels les grains de café torréfiés infusés par une boisson alcoolisée aromatique sont des grains partiellement torréfiés destinés à être utilisés dans une torréfaction ultérieure.

14. Récipient contenant les grains de café torréfiés infusés par une boisson alcoolisée aromatique selon la revendication 12, dans lequel le récipient est destiné à la préparation d'une boisson lorsqu'il est inséré dans un dispositif de préparation de boisson.

15. Utilisation d'une boisson alcoolisée aromatique à teneur réduite en alcool pour infuser des grains de café.
